# EUROPEAN PATENT SPECIFICATION

(11) **EP 4 307 066 B1**
(45) Date of publication and mention of the grant of the patent: **07.10.2026**
(21) Application number: 22185018.3
(22) Date of filing: 14.07.2022
(51) Int. Cl.: G05B 23/02

(54) **METHOD FOR LIFETIME PREDICTION AND MONITORING**
VERFAHREN ZUR LEBENSDAUERVORHERSAGE UND -ÜBERWACHUNG
PROCÉDÉ DE PRÉDICTION ET DE SURVEILLANCE DE LA DURÉE DE VIE

(43) Date of publication of application: 17.01.2024
(73) Proprietor: Hitachi Energy Ltd, 8050 Zürich (CH)
(72) Inventor: CHRISTEN, Thomas, 5413 Birmenstorf (CH); MACEDO, Felipe, 8134 Adliswil (CH)
(74) Representative: Vossius & Partner Patentanwälte Rechtsanwälte mbB

(56) References cited:
- WO-A2-2018/013247
- US-B1- 10 964 130
- US-B2- 10 209 314
- KULKARNI CHETAN ET AL: "Health Management and Prognostics for Electric Aircraft Powertrain", 2019 AIAA/IEEE ELECTRIC AIRCRAFT TECHNOLOGIES SYMPOSIUM (EATS), AIAA, 22 August 2019 (2019-08-22), pages 1 - 13, XP033678026, [retrieved on 20191224], DOI: 10.2514/6.2019-4474

## Description

The present disclosure relates to methods and systems for device monitoring, in particular for monitoring devices for the generation, the transmission, the distribution and/or the usage of electrical energy.

Device failures can have drastic consequences. In many cases, the damages from an unexpected device failure can exceed the cost of the device by far. In some cases, device failures are prevented by monitoring the device. Monitoring includes detecting and indicating deviations in properties of the device which could indicate a deterioration of a state of the device. In the case that the device is monitored while the device is in operation, it is also referred to as on-line monitoring. Existing monitoring uses physical sensors for observing a device property. Alternatively, in other cases device failures are prevented using statistical predictions. For example, a device may undergo maintenance regularly, for example after a minimum predetermined amount of time has passed or after the device has performed a predetermined number of cycles.

US 10 964 130 B1 relates to a method for determining when maintenance of components of complex vehicles. WO 2018/013247 A2 relates to a method for analyzing an object based on a probability. US 10 209 314 B2 relates to a method for estimation and prediction of battery health and performance. Kulkarni C. et al., "Health Management and Prognostics for Electric Aircraft Powertrain" relates to a method for model-based prognostics of an electric aircraft powertrain.

An object of the present disclosure is to provide a more accurate approach for preventing a failure.

This object is addressed by the method of claim 1.

By the aforementioned method, a more accurate and reliable signal indicating a health prediction (prognostics) of the device is provided. This way, a device failure may be prevented more reliably and efficiently.

The scope is defined by the independent claims.

An aging variable reflects a property of the device which can be considered as constant or nearly constant on a timescale of normal device operations. A vector comprised of one or more aging variables may be denoted as *̅µ̅*̅. Note that the vector arrow only indicates the fact that the corresponding quantity can have more than one component, while different vectors, e.g., *̅µ̅*̅ and *̅α̅*̅ below, may have different numbers of components. In the following, when it is referred to the aging variables *̅µ̅*̅, the case in which there is only one aging variable *̅µ̅*̅ is included.

The aging model defines a dynamic behavior of the one or more aging variables *̅µ̅*̅ in time, thereby modelling an aging of the device. Aging, which is also called degradation, refers to an often-irreversible decay of the health of the device due to a significant temporal change of aging variables *̅µ̅*̅ on a timescale that is typically long compared to the timescale of device operations. In the reliability context this refers mainly to wear-out failures. Degradation may happen slowly and continuously. Degradation may happen quickly but with small increments distributed in time, e.g., at device operations. The aging variables *̅µ̅*̅ can thus often be considered continuous or quasi-continuous on the long aging timescale. As described above, the aging variables *̅µ̅*̅ can be considered as constant for a device operation. Aging happens due to deterministic and stochastic stresses. For example, aging may occur during operation, which is referred to as cycle aging. Aging may also occur unrelated to operation due to external factors, such as environmental phenomena, which is referred to as calendar aging.

The EOL boundary is a surface in the variable space of the aging variables *̅µ̅*̅ which defines the division between values of the aging variables *̅µ̅*̅ associated with an acceptable or healthy device (acceptance region) and values of the aging variables *̅µ̅*̅ associated with a device having an unacceptable condition, which we call unhealthy. In other words, a device is considered unhealthy when the device has a high probability, say *P_{EOL},* of being outside of the acceptance region. In one example, the EOL boundary may be defined by a destructive failure of the device. In another example, the EOL boundary may be defined by a malfunction. In again another example, the EOL boundary may be defined by an additional safety margin to a failure boundary. Generally speaking, the EOL boundary condition is defined with regard to one or more failure and/or unsatisfactorily behavior scenarios which shall be prevented using with the method.

When the aging variable values *̅µ̅*̅ cross the surface defined by the EOL boundary conditions, the aging variables *̅µ̅*̅ leave the acceptance region which leads to a decay of the reliability *R,* which is defined as the probability to be in this region. Aging variables *̅µ̅*̅ which reach the EOL boundary condition may be absorbed, e.g., as the corresponding device is removed (or fails). The EOL boundary condition may be an absorbing boundary condition associated with vanishing probability density.

In some examples, the acceptance region or part of its boundaries may also include sources for the probability density. For example, when aging variables *̅µ̅*̅ reach an EOL boundary, maintenance or replacement of the device may be triggered. In this case, the aging variable *̅µ̅*̅ may continue its dynamics by restarting at another location in the acceptance region or on its surface.

Further boundary conditions may be defined, which do not reflect EOL boundary conditions. For example, a no-flux boundary condition may be defined, i.e., a boundary condition for which there is no probability decay.

The aging model defines a dynamic behavior of the one or more aging variables *̅µ̅*̅ in time using one or more equations. In one example, the dynamics of the device aging are modeled in terms of stochastic differential equations (SDE) for the aging variables *̅µ̅*̅(*t*), for example Langevin equations. In another example, the dynamics of the device aging are modeled in terms of its equivalent partial differential equation (PDE) for the associated probability density function (PDF) *p*(*µ̅, t),* for example Fokker-Planck equations (FPE).

The PDF for the aging variable over time *p*(*µ̅, t)* defines a probability distribution for the aging variables *̅µ̅*̅ at a time *t*.

The method comprises solving the at least one equation from the aging model with the EOL boundary condition, for example numerically. As a result, a PDF for the aging variable over time *p*(*µ̅, t*) is obtained. Thus, while values of the aging variables *̅µ̅*̅(*t*) are not directly calculated for any time in the future, a PDF of the aging variables *̅µ̅*̅(*t*) is obtained for any time *t in* the future. Typically, the PDF is less localized for more distant points in time, reflecting a growing uncertainty with regard to the values of the aging variables *̅µ̅*̅(t) for points in time more distant in the future.

The method further comprises measuring an operating condition related observable of the device at a time *t*₁. The observable is a variable *ψ*, or a vector of variables *̅ψ̅*̅ which need to be accessible to a measurement, e.g., using a sensor. In the following, when it is referred to the observables *̅ψ̅*̅, the case in which there is only one observable *ψ* is included.

The observables *̅ψ̅*̅ need to show some relationship, e.g., a direct functional relation or a stochastic correlation, to at least part of the aging variables *̅µ̅*̅. First data representing measurement of the observable at the time *t*₁ is obtained.

The relationship between the observable *̅ψ̅*̅ and the aging variables *̅µ̅*̅ allows for providing a likelihood *pₘ*(*µ̅, tₘ*) of the aging variables *̅µ̅*̅ at the time of the measurement *tₘ.*

The likelihood is used for updating the calculated PDF of the aging variables *̅µ̅*̅(*t*) based on the likelihood. The updating of the calculated PDF is performed using a Bayesian inference update. This way, the information which is provided by the measurement about the aging variables *̅µ̅*̅ is incorporated in the aging model. For example, when a measurement indicates that a value of an aging variable is smaller than the calculated PDF of the aging variables *̅µ̅*̅(*t*) predicted, the PDF is updated to reflect the unexpected dynamics and the updated PDF *̅µ̅*̅(*t*) predicts smaller values for this aging variable for time points after the time of the measurement tₘ. As another example, when a measurement indicates that a value of an aging variable is smaller than the calculated PDF of the aging variables *̅µ̅*̅(*t*) predicted, the PDF is updated to reflect the unexpected dynamics and the updated PDF *̅µ̅*̅(*t*) predicts smaller values for this aging variable for time points after the time of the measurement tₘ.

Finally, the method comprises generating a signal indicating a health prediction of the device based on the probability density function, the aging model and the EOL boundary condition. The signal indicating a health prediction may comprise any of a lifetime curve, a reliability curve, a failure probability density curve, a remaining lifetime value, a RUL value, a reliability value, an unreliability value, a failure probability value, and/or similar values or curves which relate to a predicted device health and/or predicted device reliability.

Various embodiments may preferably implement the following features:
Preferably, the method further comprises providing or obtaining a device model, wherein the device model comprises an equation with the aging variable as a device parameter; wherein the EOL boundary condition is based on the device model; and wherein the calculation of the likelihood is based on the device model.

The device model defines the dynamics of the device in terms of state variables *̅ϕ̅*̅(*t*) on a fast timescale of operation, thereby modelling an operating behavior of the device. In contrast, the aging model defines the dynamics of the device in terms of the aging variables *̅µ̅*̅(*t*) on a slow timescale of aging, as described before. The aging variables *̅µ̅*̅(*t*), which are considered to be continuous or quasi-continuous for the aging model, are treated as constant device parameters *̅µ̅*̅ in the device model.

The device model may be used for simulating the behavior of the device for different values of the device parameters *̅µ̅*̅. As such, device parameters *̅µ̅*̅ which show inacceptable behavior in the simulations are used to define the EOL boundary conditions. Inacceptable behavior may for example include unstable behavior of state variables, state variables exceeding safety thresholds, and/or state variables associated with an end of life of the device. The EOL boundary conditions may be obtained from the device model numerically or analytically.

The calculation of the likelihood may be based on the device model. The device model defines a relationship between the state variables *̅ϕ̅*̅(*t*) and the device parameters *̅µ̅*̅. This relationship can be expressed as a PDF for the state variables *̅ϕ̅*̅(*t*) conditioned on the device parameters *̅µ̅*̅. Then, in the case that the first data is *̅ϕ̅*̅(*tₘ*) = *Φ*ₘ, the likelihood pₘ(*̅µ̅*̅) is calculated as *p*ₘ(*̅µ̅*̅) = *p*( *Φₘ* | *̅µ̅*̅), as defined by the device model.

By providing or obtaining the device model, the EOL boundary conditions better reflect the actual failure, and the likelihood better reflects the actual information contained in the measurement. Therefore, the prediction becomes more accurate. This way, unexpected device failures are prevented and wasteful prophylactic maintenance is reduced.

Preferably, the method further comprises providing or obtaining a monitoring model, wherein the monitoring model comprises an equation with the observable and the aging variable; wherein the monitoring model is based on the device model; and wherein calculating the likelihood is based on the monitoring model.

Since the observables *̅ψ̅*̅ need to be accessible to a measurement, e.g., using a sensor, some or all of the state variables *̅ϕ̅*̅ or the aging variables *̅µ̅*̅ may not be suitable as observables *ψ̅.* As described before, the observable *̅ψ̅*̅ shows some relationship to at least part of the aging variables *̅µ̅*̅. This relationship may be defined by a monitoring model and be based on the device model.

The monitoring model comprises an equation with the observables *̅ψ̅*̅ and the aging variable *̅µ̅*̅. This equation, which might be comprised of multiple sub-equations, defines the relationship between the observable *̅ψ̅*̅ and the aging variables *̅µ̅*̅. For example, when the relationship is a stochastic correlation, the equation may comprise a definition of conditional probabilities.

For example, in the case that the measurement of the observables *̅ψ̅*̅ corresponds to a very exact value µ₁ = *a* and contains no information on other aging variables, the distribution pₘ(*̅µ̅*̅) may be a normalized Gaussian function of *µ₁* which is sharply peaked at *a* and is independent of other condition variables. In other words, in this case the monitoring model includes a strongly localized Gaussian function.

By providing or obtaining the monitoring model, the actual information contained in the measurement may be extracted more thoroughly and accurately. Therefore, the prediction becomes more accurate. This way, unexpected device failures are prevented, and wasteful prophylactic maintenance is reduced.

Preferably, the generating of the signal comprises calculating a representation of an unreliability over time based on the probability density function, the aging model and the EOL boundary condition. The unreliability is also referred to as failure probability and has the time as its underlying space. It is generated based on the probability density function *p*(*µ̅, t),* which has *̅µ̅*̅ as its underlying space.

The reliability *R*(*t*) *= f_{Ωa} dµ p*(*µ̅, t*) of the device outputs at every time *t* the probability of the device of being in the acceptance region Ωₐ and thus of not having failed before this time. The unreliability, 1 - *R*(*t*) corresponds thus to the probability of the device having failed until this time. The reliability and this failure probability for a specific point in time are calculated by marginalizing the PDF defined by solving the aging model over the part of the variable space, the acceptance region partially bounded by an EOL boundary.

In this case of an absorbing EOL boundary condition, the aging variables *̅µ̅*̅ are absorbed at this boundary, i.e., ***p*|_{∂Ω*a*}** = **0**. In this sense, the probability of a device failure is concentrated on the EOL boundary.

By calculating a representation of an unreliability over time, the prediction obtained from the aging model becomes digestible and actionable. The unreliability is also referred to as failure probability. The failure probability over time allows for further analysis and for a flexible response adjusted to both the technical need and the remaining operation time of the device. This way, managing an optimal lifetime of the device without risking failures is facilitated.

Preferably, the generating of the signal comprises calculating a Remaining Useful Lifetime, RUL, value.

The RUL value reflects the amount of time before a device cannot be considered useful anymore according to the prediction. The RUL is obtained by calculating the failure probability over time. A predetermined threshold value *P_{EOL}* defines an acceptable maximum unreliability, 1 - *R*(*t*)*,* or probability to have failed, of the device. The point in time *t*_{EOL} for which the failure probability succeeds the threshold, i.e., 1 - *R* ≥ *P_{EOL}* is the predicted point in time at which the device cannot be considered useful anymore. The RUL can then be obtained as *t*_{EOL} - *t*, i.e., the amount of time until the time at EOL, *t*_{EOL}, given by *R*(*T_{EOL}*) *=* 1 *- P_{EOL}.*

Further signals indicating a health may include a lifetime PDF, a hazard function and a mean time to failure (MTTF). The lifetime PDF indicates a development of the reliability over time and describes the net probability current flow out of Ωₐ. The lifetime PDF is obtained by calculating ${p}_{LT} \left(t\right) = - \frac{dR}{dt} ,$ where R is the reliability.

The hazard function is the failure rate at time *t* conditional on survival until time *t* or later. It is obtained by calculating $h \left(t\right) = - \frac{d}{dt} ln R \left(t\right) ,$ where *R* is the reliability.

The MTTF is the expected, i.e., predicted average amount of time until device failure. It is obtained by calculating ${t}_{MTTF} = {\int }_{0}^{∞} {tp}_{LT} \left(t\right) dt = {\int }_{0}^{∞} R \left(t\right) dt ,$ where R is the reliability.

Note that the MTTF is not necessarily equal to *t*_{EOL}; in fact, the reliability at MTTF is often not acceptable and *t*_{EOL} is earlier. By calculating a RUL value, the prediction obtained from the aging model for a plurality of devices becomes comparable and manageable. For example, overhaul and replacement bottlenecks which could lead to device failures may be identified in advance, thus preventing them to happen. In this way, managing a fleet of devices without risking failures is facilitated.

Preferably, the aging model comprises an equation with at least two aging variables of the device; wherein calculating the probability density function comprises calculating a joint probability density function of the at least two aging variables; wherein calculating the likelihood comprises calculating a likelihood for the at least two aging variables and the first data; and wherein updating the probability density function comprises updating the joint probability density function.

As described before, the present disclosure allows for monitoring a device using a single aging variable *µ* or a vector of at least two aging variables *̅µ̅*̅. Accordingly, when the aging model defines the device dynamics in terms of at least two aging variables *̅µ̅*̅, the calculation of a probability density function comprises calculating a joint probability density function of the at least two aging variables *̅µ̅*̅. Similarly, in this case the calculating of a likelihood comprises calculating a likelihood for the at least two aging variables *̅µ̅*̅ and the first data, wherein the observables corresponding to the first data need to have a relationship with at least one of the two referred aging variables. Similarly, in this case the update of the probability density function comprises updating the joint probability density function.

When the aging model comprises an equation with at least two aging variables of the device, the prediction obtained from the aging model may have higher dimension, and thus, be more reliable. Interdependencies between different failure scenarios may be identified more reliably. In this way, unexpected device failures are prevented.

Preferably, the aging model comprises an equation with aging variables of at least two devices; wherein calculating the probability density function comprises calculating a joint probability density function of the aging variables of each of the devices; wherein measuring the observable comprises measuring one or more observables of the devices, and wherein the first data represents measurements of the observables; wherein calculating the likelihood comprises calculating a likelihood for the aging variables and the first data; and wherein updating the probability density function comprises updating the joint probability density function.

The method, as described before, is also suited for monitoring a fleet of at least two devices. For example, in a system comprising multiple devices, it may be even more important to monitor the devices and predict the failure of a single device, which may impact the entire system.

In this case, measuring the observable comprises measuring one or more observables of the devices. In other words, at least one observable is measured for each of the devices monitored using present hybrid monitoring approach. The observables may be measured together for all devices at one time, e.g., at a regular time interval. The observables may be measured at different times, e.g., in the case when different devices or different sensors provide measurements at different intervals or based on events. The first data represents measurements of the observables, i.e., the first data may represent any measurements of any observables available at a given time. In the case that the observables are measured at different times, the first data may represent measurements of only part of or even only a single observable at a given time.

The hybrid monitoring method according to present disclosure may be combined with known monitoring approaches. For example, a part of the devices may be monitored as described before, while a part of the devices may be modelled using an aging model without measurements and without updating the probability density functions. In this way, existing devices without any on-line monitoring capability may be included in the monitoring.

If the aging model comprises an equation with aging variables of at least two devices, the method may be applied to a fleet of devices, where preventive maintenance is particularly important. Further, the prediction obtained from the aging model may have higher dimension, and thus, more reliable. Interdependencies between different devices and forthcoming maintenance bottlenecks may be identified more reliably. This way, unexpected device failures are prevented efficiently.

According to the invention, the device is selected from the group comprising a circuit breaker, a transformer, a power electronics device, and an energy storage device. For example, using a circuit breaker as reference, at least one of its observables must considered, such as opening/closing speed of a movable contact, travel of the movable contact, total travel of the movable contact, overtravel of the movable contact, rebound of the movable contact, opening/closing time, and opening/closing peak coil electric current of the circuit breaker, or current, voltage and further physical, electrical, or chemical quantities of transformers, power electronic devices, or energy storage devices..

The power electronics device may, for example, be a converter, an inverter, or a cycloconverter. The energy storage device may, for example, be a battery, a capacitor, a fuel cell, or a supercapacitor.

The aging variables, which allow for a prediction of a device failure, may for example include a drive spring stiffness, a friction constant, or a coil resistance.

By applying the method to devices selected from the group comprising a circuit breaker, a transformer, a power electronics device, and an energy storage device, failures can be prevented for some of the most critical infrastructure devices. Further, accurate monitoring is enabled for devices which are difficult to observe and display failure scenarios which are particularly hard to prevent.

By applying the method to devices selected from the group comprising a circuit breaker, a transformer, a power electronics device, and an energy storage device, failures can be prevented for some of the most critical infrastructure devices. Further, accurate monitoring is enabled for devices which are difficult to observe and display failure scenarios which are particularly hard to prevent.

By measuring one of an opening/closing speed of a movable contact of the circuit breaker, travel of the movable contact, total travel of the movable contact, over travel of the movable contact, rebound of the movable contact, opening/closing time of the circuit breaker, and opening/closing peak coil electric current of the circuit breaker, the observable is easily measurable and at the same time reliable and informative. This way, the method may be applied to many devices easily and device failures are prevented efficiently.

Preferably, the method further comprises triggering maintenance, overhaul, replacement, or load reduction of the device in reaction to the generated signal indicating a critical health prediction within a predetermined amount of time.

For example, when the device operates in a fleet of devices, a load may be reduced for the device in a case that the reliability of the device is low, and a load may be increased for the device in a case the reliability of the device is high. In this way, a failure of the device may be delayed and until maintenance or replacement of the device are possible.

In another example, a replacement of the device may be triggered automatically. A replacement device could even already be installed and merely need to be activated once the generated signal indicates a critical health prediction, e.g., a high failure probability.

The critical health prediction may comprise, for example, a too short RUL, a too high unreliability, or similar health indicators exceeding and/or violating a critical threshold or a criteria.

By triggering maintenance, overhaul, replacement, or load reduction, the predictive capabilities of the method are leveraged automatically and consistently. This way, human errors which may lead to unnecessary device failures are prevented.

Preferably, the method further comprises indicating a warning in reaction to the generated signal indicating a critical health prediction within a predetermined amount of time, used for future maintenance scheduling.

For example, a warning may be indicated when, for a predetermined time, for example one week, the predicted reliability value of a device is below a predetermined reliability value, for example, below 0.9 or 0.95. In reaction to the warning, the device may be scheduled for a regular weekly maintenance, thus preventing a device failure without requiring emergency actions. At the same time the warning allows using the lifetime of wearable parts or devices to an optimal extent, as a margin of safety is not based on speculation, but on the best available knowledge about the technical state of the device.

By giving a warning in reaction to a generated signal that indicates a critical health prediction within a predetermined amount of time, an organized and balanced maintenance schedule is facilitated. In this way, a state of health of the devices in a fleet may be balanced and device failure may be prevented efficiently.

The object is further addressed by a system or apparatus for monitoring a device. The system comprises at least one sensor, configured to measure an operating condition-related observable of the device; a memory, configured to store: an aging model, wherein the aging model comprises an End of Life, EOL, boundary condition and at least one equation with an aging variable of the device; a controller or another device with appropriate computational ability, configured to: calculate a probability density function over time for the aging variable based on solving the at least one equation from the aging model with the EOL boundary condition; obtain first data representing measurement of the observable; calculate a likelihood for the aging variable from the first data; update the calculated probability density function of the aging variable based on the likelihood; and generate a signal indicating a health prediction of the device based on the probability density function, the aging model and the EOL boundary condition.

The object is further addressed by a system or apparatus for monitoring a device. The system comprises at least one sensor, configured to measure an operating condition-related observable of the device; and a controller or another device with appropriate computational ability, configured to: calculate a probability density function over time for an aging variable based on solving at least one equation from an aging model with an EOL boundary condition; obtain first data representing measurement of the observable; calculate a likelihood for the aging variable from the first data; update the calculated probability density function of the aging variable based on the likelihood; and generate a signal indicating a health prediction of the device based on the probability density function, the aging model and the EOL boundary condition. The aging model may comprise the EOL boundary condition and the at least one equation with the aging variable of the device. The system or apparatus may further comprise a memory configured to store the aging model.

The controller may comprise at least one integrated circuit. As an alternative or in addition, the controller may comprise the memory.

Various embodiments may preferably implement features corresponding to the features described before with reference to the method, with corresponding technical effects and benefits.

The exemplary embodiments disclosed herein are directed to providing features that will become readily apparent by reference to the following description when taken in conjunction with the accompanied drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
FIG. 1 shows an illustration of a method according to an embodiment of the present disclosure.
FIG. 2 shows an illustration of an aging model according to a further embodiment of the present disclosure.
FIG. 3 shows an illustration of exemplary prediction outputs according to a further embodiment of the present disclosure.
FIG. 4 shows an illustration of exemplary prediction outputs according to a further embodiment of the present disclosure.
FIG. 5 shows a comparison of an exemplary prediction according to a known method with an exemplary prediction output according to a further embodiment of the present disclosure.
FIG. 6 shows an illustration of a system according to a further embodiment of the present disclosure.

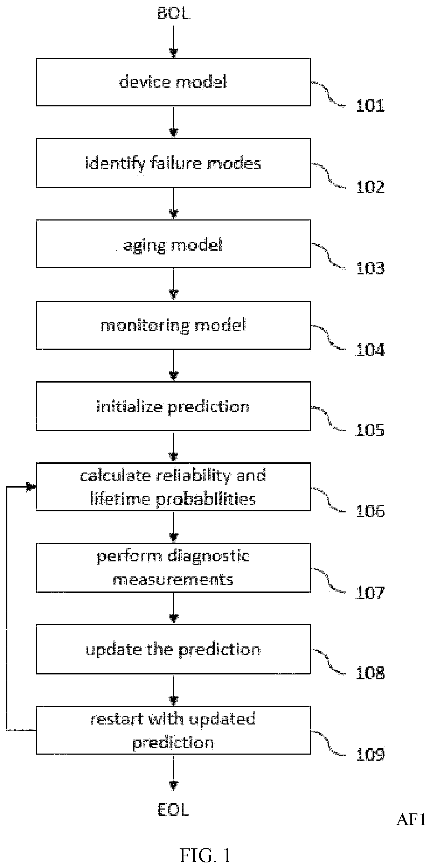

FIG. 1 shows an illustration of a method according to an embodiment of the present disclosure.

The state of health (SOH) of the device is determined in terms of aging variables *̅µ̅*̅. Starting from a beginning of life (BOL) of the device corresponding to a BOL point in the aging variable space, a prediction of the end of life (EOL) of the device consists of the following tasks:
In a first step 101, the device is modelled: define an algebraic, or ordinary or partial differential equation which contains model parameters *µ̅* based on physical insight and determine the values of *̅µ̅*̅ at BOL with experiments or other methods.

According to an embodiment, the first step 101 comprises providing or obtaining a device model, wherein the device model comprises an equation with the aging variable as a device parameter; wherein the EOL boundary condition is based on the device model; and wherein the calculation of the likelihood is based on the device model.

The device model defines the dynamics of the device in terms of state variables *̅ϕ̅*̅(*t*) on a fast timescale of operation, thereby modelling an operating behavior of the device. In contrast, the aging model defines the dynamics of the device in terms of the aging variables *̅µ̅*̅(*t*) on a long timescale of slow aging, as described before. The aging variables *̅µ̅*̅(*t*), which are considered to be continuous or quasi-continuous for the aging model, are treated as constant device parameters *̅µ̅*̅ in the device model on the comparatively short operation timescale.

The device model may be used for simulating the behavior of the device for different values of the device parameters *̅µ̅*̅. As such, device parameter values *̅µ̅*̅ which lead to inacceptable behavior in the simulations are used to define the EOL boundary. Inacceptable behavior may for example include unstable behavior of state variables, state variables exceeding safety thresholds, and/or state variable behavior associated with another type of end of life of the device. The EOL boundaries may be obtained from the device model numerically or analytically.

The calculation of the likelihood may be based on the device model if the monitoring observables are linked to the device model state, e.g., via monitoring an operation. The device model defines then a relationship between the state variables *̅ϕ̅*̅(*t*) and the device parameters *̅µ̅*̅. This relationship can be expressed as a PDF for the state variables *̅ϕ̅*̅(*t*) conditioned on the device parameters *̅µ̅*̅. Then, in the case that the first data is *̅ϕ̅*̅(*tₘ*)= *Φ*ₘ, the likelihood *p*ₘ(*̅µ̅*̅) is calculated as *p*ₘ(*̅µ̅*̅) = *p*( *Φ*ₘ | *̅µ̅*̅) as defined by the device model.

By providing or obtaining the device model in step 101, the EOL boundary conditions better reflect the actual risk of failure, and the likelihood better reflects the actual information contained in the measurement. Therefore, the prediction becomes more localized and more accurate. This way, unexpected device failures are prevented, and wasteful prophylactic maintenance is reduced.

In a second step 102, failure modes or criteria for unhealthiness are identified: determine the EOL-hypersurfaces in the space of *̅µ̅*̅, where the state of health is *SOHₖ*(*̅µ̅*̅) = 0 in aging variable space for failure mode(s) *k,* e.g., from the solutions of the device model equation (101) associated with a malfunction.

In a third step 103, an aging of the device is modelled: define a stochastic differential equation (SDE) or a Fokker-Planck equation (FPE) for the aging model based on physical insight and determine the parameter values *̅α̅*̅ with experiments or other methods. Some of the α̅ parameters are more characteristic for the individual device, while others might be rather related to statistical moments of quantities of a fleet of a number of devices. Furthermore, quantities in the aging model which first seem to belong to aging model parameters, α̅, might turn out to be better considered as stochastic auxiliary variables, *µ̅_{A},* which extends the aging model variable space. The identification of the aging model is a modeling task which may require empirical data from the field and/or from dedicated experiments.

According to one embodiment, the aging model comprises an equation with at least two aging variables of the device; wherein calculating the probability density function comprises calculating a joint probability density function of the at least two aging variables; wherein calculating the likelihood comprises calculating a likelihood for the at least two aging variables and the first data; and wherein updating the probability density function comprises updating the joint probability density function.

As has been described before, the present disclosure allows for monitoring a device using a single aging variable *µ* or a vector of at least two aging variables *̅µ̅*̅. Accordingly, when the aging model defines the device dynamics in terms of at least two aging variables *̅µ̅*̅, the calculating of a probability density function comprises calculating a joint probability density function of the at least two aging variables *̅µ̅*̅. Similarly, in this case the calculating of a likelihood comprises calculating a likelihood for the at least two aging variables *̅µ̅*̅ and the first data, wherein the observables corresponding to the first data need to have a relationship with at least one of the at least two aging variables. Similarly, in this case the updating of the probability density function comprises updating the joint probability density function.

When the aging model comprises an equation with at least two aging variables of the device, the prediction obtained from the aging model may have higher dimension and thus more reliable. Interdependencies between different failure scenarios may be identified more reliably. This way, unexpected device failures are prevented.

According to one embodiment, the aging model comprises an equation with aging variables of at least two devices; wherein calculating the probability density function comprises calculating a joint probability density function of the aging variables of each of the devices; wherein measuring the observable comprises measuring one or more observables of the devices, and wherein the first data represents measurements of the observables; wherein calculating the likelihood comprises calculating a likelihood for the aging variables and the first data; and wherein updating the probability density function comprises updating the joint probability density function.

The method as described before is also suited for monitoring a fleet of at least two devices. For example, in a system comprising multiple devices it may be even more important to monitor the devices and predict a failure of a single of the devices, which may impact the entire system.

In this case, measuring the observable comprises measuring one or more observables of the devices. In other words, at least one observable is measured for each of the devices monitored using present hybrid monitoring approach. The observables may be measured together for all devices at one time, e.g. at a regular time interval. The observables may be measured at different times, e.g. in the case when different devices or different sensors provide measurements at different intervals or based on events. The first data represents measurements of the observables, i.e. the first data may represent any measurements of any observables available at a given time. In the case that the observables are measured at different times, the first data may represent measurements of only part of or even only a single observable at a given time.

The hybrid monitoring method according to present disclosure may be combined with known monitoring approaches. For example, a part of the devices may be monitored as described before, while a part of the devices may be modelled using an aging model without measurements and without updating the probability density functions. This way, existing devices without any on-line monitoring capability may be included in the method.

If the aging model comprises an equation with aging variables of at least two devices, the method may be applied to a fleet of devices, where preventive maintenance is particularly important. Further, the prediction obtained from the aging model may have higher dimension and thus more reliable. Interdependencies between different devices and forthcoming maintenance bottlenecks may be identified more reliably. This way, unexpected device failures are prevented efficiently.

In a fourth step 104, the monitoring is modelled: the relation between the observables *̅ψ̅*̅ and the variables/parameters *̅ϕ̅*̅ and *̅µ̅*̅ are determined, e.g., from experiments or an appropriate physical model. Preferably, the likelihood of the *̅µ̅*̅-values is directly measured, e.g., using a normal physical sensor, or using soft sensing, e.g., using a soft sensor/virtual sensor.

According to an embodiment, the fourth step 104 comprises providing or obtaining a monitoring model, wherein the monitoring model comprises an equation with the observable and the aging variable; wherein the monitoring model is based on the device model; and wherein calculating the likelihood is based on the monitoring model.

The observables *̅ψ̅*̅ should be accessible to a measurement, e.g., using a sensor. They do not need necessarily include any variable from the state variables *̅ϕ̅*̅ or the aging variables *̅µ̅*̅. As described before, the observable *̅ψ̅*̅ shows some relationship to at least part of the aging variables *̅µ̅*̅. This relationship may be defined by a monitoring model and be based on the device model.

The monitoring model comprises an equation with the observables *̅ψ̅*̅ and the aging variable *̅µ̅*̅. This equation, which might be comprised of multiple sub-equations, defines the relationship between the observable *̅ψ̅*̅ and the aging variables *̅µ̅*̅. For example, when the relationship is a stochastic correlation, the equation may comprise a definition of conditional probabilities.

For example, in the case that the measurement of the observables *̅ψ̅*̅ corresponds to a very exact value of e.g. *µ*₁ = *a* and contains no information on other aging variables, the distribution *pₘ*(*̅µ̅*̅) may be a normalized Gaussian function of *µ*₁ which is sharply peaked at *a* and is independent of other condition variables. In other words, in this case the monitoring model includes a strongly localized Gaussian function (or other approximations of a Dirac-delta function).

By providing or obtaining the monitoring model, the actual information contained in the measurement may be extracted more thoroughly and accurately. Therefore, the prediction becomes more localized and more accurate. This way, unexpected device failures are prevented, and wasteful prophylactic maintenance is reduced.

In a fifth step 105, the prediction is initialized: Determine/define the initial values of all variables and parameters. *̅ϕ̅*̅, *̅µ̅*̅ and *̅α̅*̅ at BOL must be determined. Since the FPE will be used in the procedure for *̅µ̅*̅ the initial distribution *p*₀(*̅µ̅*̅) should be given. The initial distribution will be illustrated using an exemplary Gaussian distribution with an appropriate standard deviation in the following. Other distributions are also applicable without further complication.

In a sixth step 106, reliability and lifetime probabilities are calculated: The SDE or FPE of the aging model is solved for *p*(*µ̅, t*) with initial condition *p*₀(*̅µ̅*̅) until the EOL is reached. *R*(*t*) is then calculated as described before, i.e., *R*(*t*) *= ∫_{Ωa} dµ p*(*µ̅, t*). Based on the reliability *R*(*t*) and a predetermined threshold, the lifetime *t*_{EOL} is determined as described before, which gives the RUL by calculating *RUL(t) = t_{EOL} - t.*

In a seventh step 107, diagnostic measurements are performed: at time *tₘ*, additional information is obtained by monitoring. Monitoring provides firstly binary information on being dead or being alive, i.e., if the devices has failed or not since the last information gain. In the latter case, the probability distribution *pₘ*( *̅µ̅*̅) can be derived. For example, if the information corresponds to a very exact value of, say *µ*₁ = *a*, and contains no information on other device model parameters the distribution *pₘ*(*µ*₁) may be a normalized Gaussian function of *µ*₁ which is sharply peaked at *a*, i.e., strongly localized, and is independent of other condition variables.

In an eighth step 108, the prediction (106) is updated: In a first prediction sub-step the solution of the SDE or FPE of the aging model predicts the prior probability $p < \left(\vec{μ}, {t}_{m}\right) = {lim}_{ϵ \to 0 , ϵ > 0} p \left({μ}^{\to }, {t}_{m}-ϵ\right)$ just before *tₘ.* In a second correction sub-step, this prediction must be corrected with the help of the diagnostics measurement from the seventh step (107). The updated probability *p*_{>}(*̅µ̅*̅, *tₘ*), which is also referred to as posterior probability, may by calculated with a Bayes inference procedure as follows: $p > \left(\vec{μ}, {t}_{m}\right) = C {p}_{m} \left(\vec{μ}\right) p < \left(\vec{μ}, {t}_{m}\right)$ with normalization constant *C,* likelihood *pₘ*( *̅µ̅*̅ ), and prior distribution *p*_{<}. Normalization is justified because, by assumption, one knows from diagnostics with certainty if the device is alive. In exceptional cases where this binary information is not given, the constant *C* must be determined according to the given knowledge on the probability to be in malfunction. After the correction step, the RUL calculation step can be redone by starting at tₘ with new initial condition *p*_{>}(*µ̅, tₘ*)*.*

In the case that the likelihood *pₘ* and prior probability *p<* are Gaussian, they are conjugate and *p>* is also Gaussian. The averages and standard deviations of the three distributions satisfy then the relations of a special Kalman filter update. In general, however, *p*(*µ̅, t*) as a solution of the FPE is not Gaussian but depends on the underlying aging model; the method is thus able to cover more general real cases.

In a ninth step 109, using the corrected state, restart from time *tₘ* on with the sixth step 106.

The method stops when the device reaches the EOL, i.e., when the true reliability is *R(t_{EOL}) = 1 - P_{EOL}..*

At any point of the method, a signal indicating a health prediction of the device may be generated. The health prediction of the device is based on the probability density function, the aging model and the EOL boundary condition. For example, a signal indicating a health prediction of the device may be generated after the sixth step 106, or after the eight step 108.

According to one embodiment, the generating of the signal comprises calculating a representation of an unreliability over future time based on the probability density function, the aging model and the EOL boundary condition.

The unreliability over time, also referred to as failure probability over time, is here a function which outputs, for any given point in future time, a probability of a device failure. The failure probability for a specific point in time may also be called the unreliability of the device at that point in time. For a given point in time, the failure probability is calculated by marginalizing the PDF defined by solving the aging model in the acceptance region Ω*ₐ*.

In the case of an absorbing EOL boundary condition, the aging variables *̅µ̅*̅ leave the acceptance region through the surface defined by the EOL boundary condition, i.e. ***p***|**∂Ω**ₐ = **0**. In this way, the device failure is concentrated on the surface defined by the EOL boundary condition. For this case, the failure probability is calculated by marginalizing the PDF defined by solving the aging model over the surface **∂Ω**ₐ defined by the EOL boundary condition, i.e. *P_{EOL} =* 1 - *∫_{Ωa} dµ p*(*µ̅, t*). The failure probability is a complement of the reliability *R,* i.e. *R* = 1 - *P_{EOL}.*

By calculating a representation of an unreliability over time, the prediction obtained from the aging model becomes digestible and actionable. The failure probability prediction over time allows for further analysis and for a flexible response adjusted to both the technical need and the remaining operation time of the device. This way, managing an optimal lifetime of the device without risking failures is facilitated.

According to one embodiment, the generating of the signal comprises calculating a Remaining Useful Life, RUL, value.

The RUL value reflects the predicted remaining amount of time until a device cannot be considered useful anymore according to the operation requirements. The RUL is obtained by calculating the failure probability over time. A predetermined threshold for the failure probability defines an acceptable unreliability of a device. The point in time *t*_{EOL} for which the failure probability goes beyond the threshold *P_{EOL},* i.e. 1-R( t_{EOL}) ≥ P_{EOL}, is the predicted point in time at which the device cannot be considered useful anymore. The RUL can then be obtained as *t*_{EOL} - *t*, i.e. the amount of time until *t*_{EOL}.

Further signals indicating a health may include a lifetime PDF, a hazard function and a mean time to failure (MTTF). The lifetime PDF indicates a development of the reliability over time and describes the net probability current flow out of Ωₐ. It is obtained by calculating ${p}_{LT} \left(t\right) = - \frac{dR}{dt} ,$ where R is the reliability.

The hazard function is the failure rate at time *t* conditional on survival until time *t* or later. It is obtained by calculating $h \left(t\right) = - \frac{d}{dt} ln R \left(t\right) ,$ where R is the reliability.

The MTTF is the expected, i.e., predicted, amount of time of a device failure. It is obtained by calculating ${t}_{MTTF} = {\int }_{0}^{∞} {tp}_{LT} \left(t\right) dt = {\int }_{0}^{∞} R \left(t\right) dt ,$ where *R* is the reliability. Note that the MTTF is not necessarily equal to *t*_{EOL}; in fact, the reliability at MTTF is often not acceptable and *t*_{EOL} is earlier.

By calculating a RUL value, the prediction obtained from the aging model for a plurality of device becomes comparable and manageable. For example, overhaul and replacement bottlenecks which could lead to device failures may be identified in advance, thus preventing device failures. This way, managing a fleet of devices without risking failures is facilitated.

According to one embodiment, the method further comprises triggering maintenance, overhaul, replacement, or load reduction of the device in reaction to the generated signal indicating a critical health prediction within a predetermined amount of time.

For example, when the device operates in a fleet of devices, a load may be reduced for the device in a case that the reliability of the device is low, and a load may be increased for the device in a case that the reliability of the device is high. This way, a failure of the device may be delayed and until maintenance or replacement of the device are possible.

In another example, a replacement of the device may be triggered automatically. A replacement device could even already be installed and merely need to be activated once the generated signal indicates a critical health prediction, e.g., a high failure probability.

By triggering maintenance, overhaul, replacement, or load reduction, the predictive capabilities of the method are leveraged automatically and consistently. This way, human errors which may lead to unnecessary device failures are prevented.

According to one embodiment, the method further comprises indicating a warning in reaction to the generated signal indicating a critical health prediction within a predetermined amount of time, used for future maintenance scheduling.

For example, a warning may be indicated when a device is expected to fall below a predetermined reliability, for example below 0.9, within a predetermined time, for example within one week or one month. In reaction to the warning, the device may be scheduled for a regular weekly or monthly maintenance, thus preventing a device failure without requiring emergency actions. At the same time the warning allows using the lifetime of wearable parts or devices to an optimal extent, as a margin of safety is not based on speculation but on the best available knowledge about the technical state of the device.

By indicating a warning in reaction to the generated signal indicating a critical health prediction within a predetermined amount of time, an organized and balanced maintenance schedule is facilitated. This way, a state of health of the devices in a fleet may be balanced and device failure may be prevented efficiently.

According to one embodiment, the device is selected from the group comprising a circuit breaker, a transformer, a power electronics device, and an energy storage device; and at least one observable is one of: an opening/closing speed of a movable contact of the circuit breaker, travel of the movable contact, total travel of the movable contact, over travel of the movable contact, rebound of the movable contact, opening/closing time of the circuit breaker, and opening/closing peak coil electric current of the circuit breaker. Additionally or alternatively, the observables may comprise current values, voltage values and/or state of charge values.

The power electronics device may for example be one of a converter, an inverter, or a cycloconverter. The energy storage device may for example be a battery, a capacitor, a fuel cell, or a supercapacitor.

The aging variables for the circuit breaker, which allow for a prediction of a device failure, may for example include a drive spring stiffness, a friction constant, or a trip coil resistance.

By applying the method to devices selected from the group comprising a circuit breaker, a transformer, a power electronics device, and an energy storage device, failures can be prevented for some of the most critical infrastructure devices. Further, accurate monitoring is enabled for devices which are difficult to observe and display failure scenarios which are particularly hard to prevent.

By applying the method to devices selected from the group comprising a circuit breaker, a transformer, a power electronics device, and an energy storage device, failures can be prevented for some of the most critical infrastructure devices. Further, accurate monitoring is enabled for devices which are difficult to observe and display failure scenarios which are particularly hard to prevent.

By measuring one of an opening/closing speed of a movable contact of the circuit breaker, travel of the movable contact, total travel of the movable contact, overtravel of the movable contact, rebound of the movable contact, opening/closing time of the circuit breaker, and opening/closing peak coil electric current of the circuit breaker, the observable is easily measurable and at the same time reliable and informative. This way, the method may be applied to many devices easily and device failures are prevented efficiently.

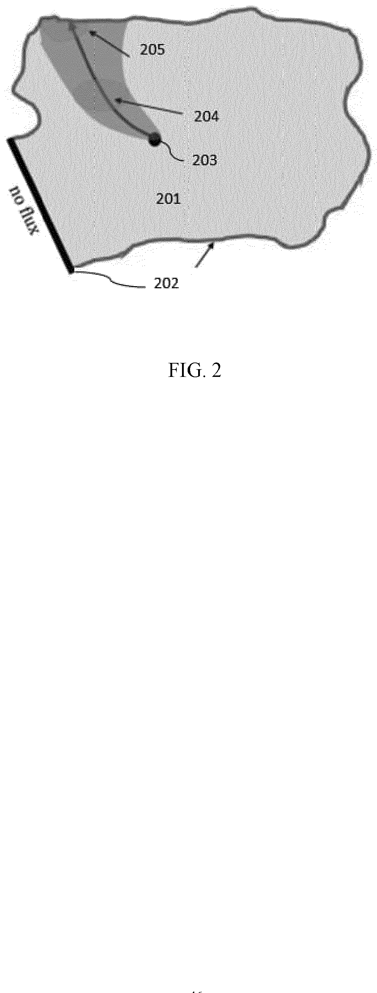

FIG. 2 shows an illustration of an aging model of a device according to a further embodiment of the present disclosure. The aging model includes equations for aging variables *̅µ̅*̅(*t*) which are not depicted in the illustration. The aging variables *̅µ̅*̅(*t*) span a variable space 200, which may also be called condition space or the *̅µ̅*̅-space. This variable space is illustrated in a two-dimensional plane, as the example shows a vector of two aging variables *̅µ̅*̅(*t*) = (*µ*₁(*t*), *µ*₂(*t*)).

The variable space comprises a region, the acceptance region, Ωₐ 201 associated with an alive condition associated with a properly working device, which is delimited by a boundary surface ∂Ωₐ 202 with boundary conditions for the aging model equations, i.e., the SDE or the FPE. The boundary surface 202 is comprised of a first boundary illustrated as a straight bold line, which corresponds to a no-flux boundary condition, and a second boundary illustrated as a light curved line, which corresponds to an absorbing EOL boundary condition. More generally speaking, some parts of the boundary ∂Ωₐ act as absorbers, i.e., they are EOL-boundaries, while other parts of the boundary may be "closed" and described by zero probability flux. Sources in the interior of the acceptance regions or in the boundary conditions corresponding to repair and overhauls are not illustrated in FIG. 2, but also possible.

The sketch illustrates an aging process in terms of a slow change of aging variables on a long timescale. The aging process begins at a beginning of life (BOL), point 203 in the acceptance region, which corresponds with a beginning of life of the device and reliability *R*=*1*. The illustration shows a trajectory from the point BOL towards the boundary surface ∂Ωₐ. The trajectory is illustrated with the help of an arrow indicating a predicted path of highest probability, and a path of the probability density function (PDF) which become less and less localized, i.e., broader over time. A first PDF *p*(*µ̅, t₁*) 204 is singled out from the solution of the SDE or the FPE for an arbitrary point in time *t₁.* A further PDF 205 is singled out from the path for a further point in time *t₂* close to the boundary surface. The end of life of the device is reached when the probability R to be in the region Ωₐ drops below an acceptable value (1 *- P_{EOL}).*

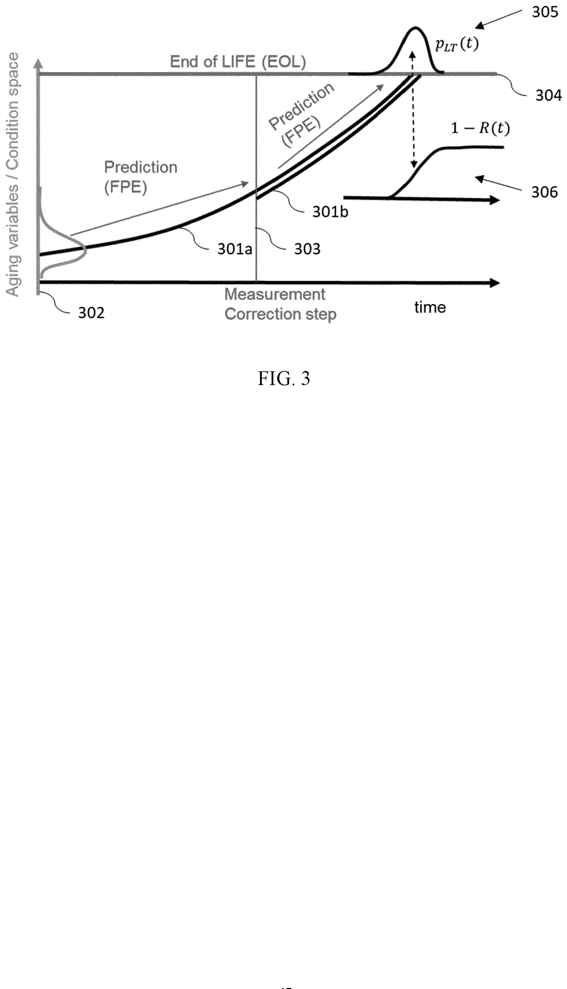

FIG. 3 shows an illustration of exemplary prediction outputs according to a further embodiment of the present disclosure.

The illustration shows exemplary prediction outputs for an aging process of a single aging variable *µ*, which is depicted on a vertical scale, against the time depicted on a horizontal scale. The prediction of the aging variable is illustrated with the help of a trajectory 301a, which represents a most probable path obtained from *p*(*̅µ̅*̅, *t*). An aging variable PDF 302 for the point in time *t₀* = *0* is singled out on the very left of the illustration. It can be seen that the trajectory 301a corresponds with a peak of the PDF 302. For the trajectory 301a the RUL is calculated, which is illustrated when the trajectory reaches the EOL boundary given by the red line 304. At a point in time *t₁* a measurement 303 is illustrated by a vertical line. At this point in time, the prediction is corrected by updating the PDF as described herein. This is illustrated by a changed starting point of the trajectory 301b from this point in time onwards. The new prediction again reaches until a EOL boundary 304, which is represented by a horizontal line limiting the aging variable dimension. A lifetime PDF 305 is shown at a top of the illustration. It can be seen that the point where the trajectory 301 crosses the EOL boundary 304 corresponds with the peak of the lifetime PDF, which illustrates the probability of EOL over time. Below, a graph 306 of the failure probability (unreliability) over time is illustrated, which corresponds to a cumulative version of the lifetime PDF. Therefore, the point where the trajectory 301 crosses the EOL boundary 304 corresponds with a steep increase in the failure probability 1 - *R(t),* i.e., a steep decrease in the reliability *R(t)*.

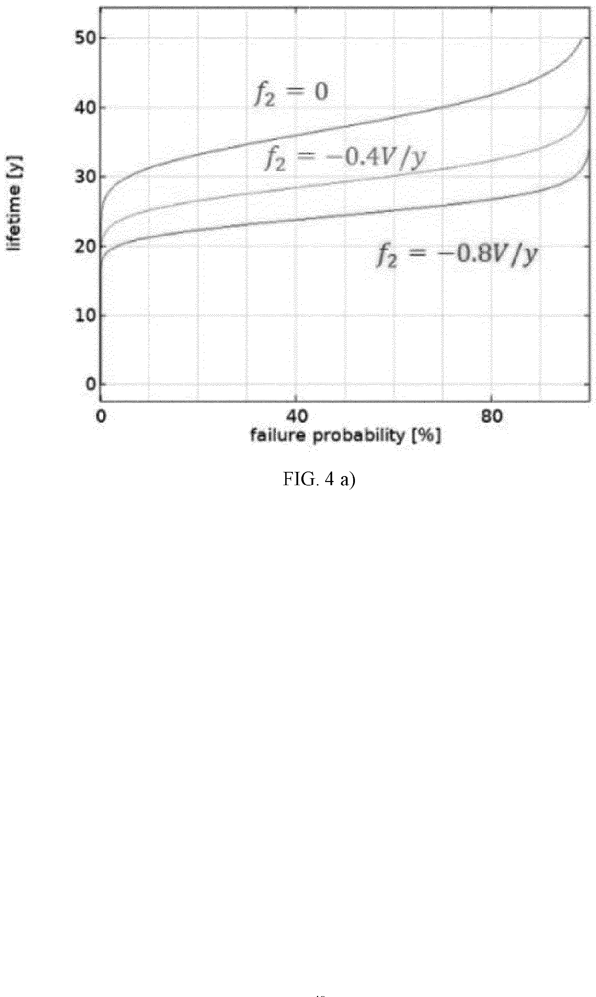

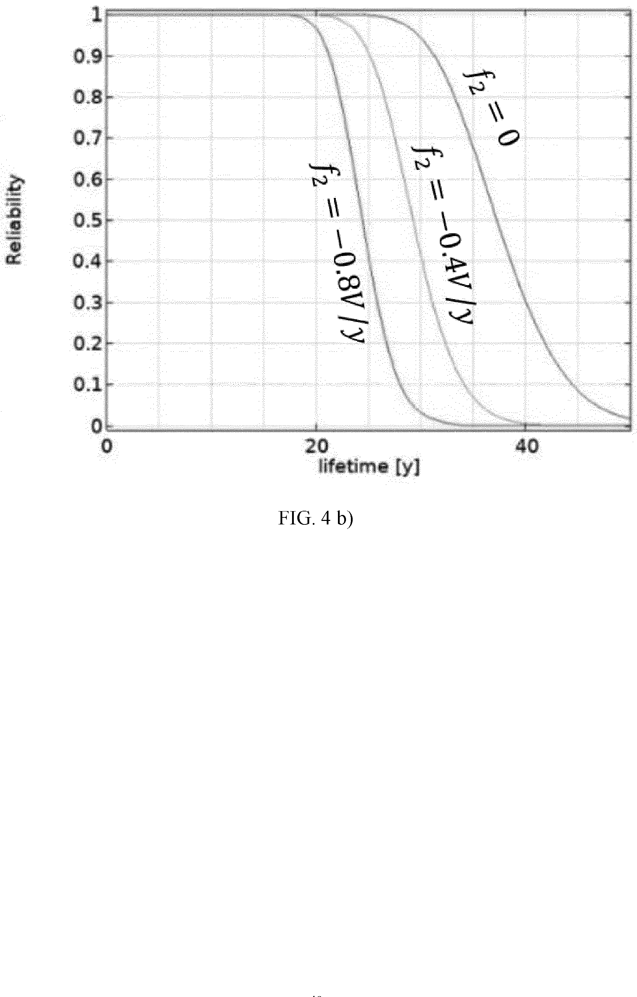

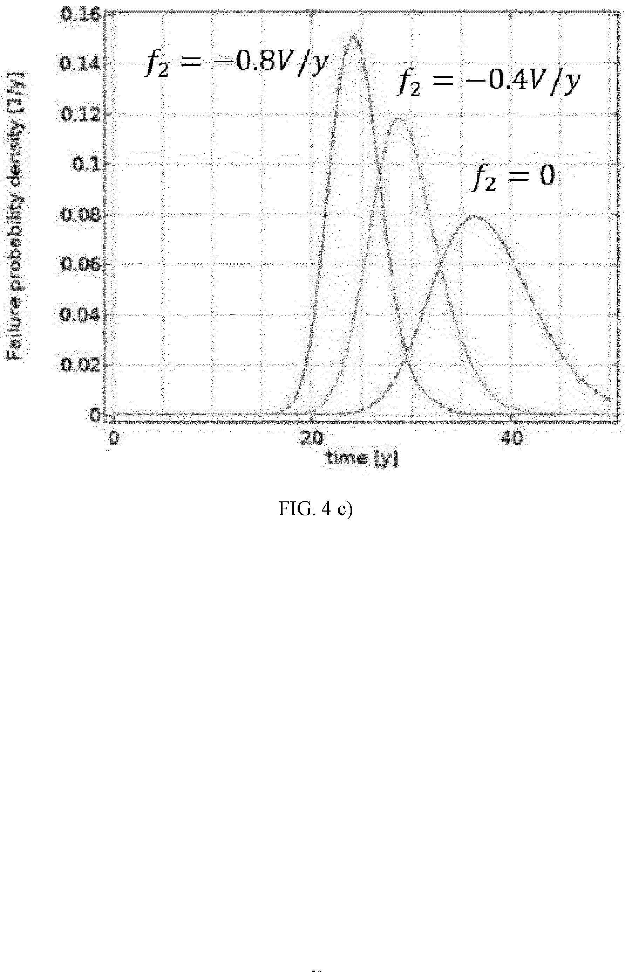

FIG. 4 shows an illustration of exemplary prediction outputs according to a further embodiment of the present disclosure.

In sub-figure a), predicted three lifetime curves are plotted for different aging rates of a two-dimensional aging variable space (*µ*₁, *µ*₂) with an EOL boundary not shown here. The diagram shows, on a vertical axis, the lifetime in years and on the horizontal axis a failure probability in percentages. Each curve displays the lifetime as a function of the failure probability for a particular aging rate of the second variable *µ*₂ while the aging rate of *µ*₁ is constant. For example, when the aging rate of the second variable *µ*₂ is *f*₂=0*V*/*y,* a failure probability of 70% corresponds to a lifetime of 40 years. In other words, if a device is not considered useful anymore at a failure probability above 70%, the device can be expected to be useful for a time of 40 years. As can be seen in sub-figure a), the lifetime decreases particularly fast when very low failure probabilities are not considered acceptable, and increases particularly fast when very high failure probabilities are considered acceptable.

In sub-figure b), three reliability curves are plotted for the same different aging rates as in sub-figure a). The diagram shows, on a vertical axis, a reliability as a value between 0 and 1 and on the horizontal axis a lifetime in years. Each curve displays the reliability as a function of time for a particular aging rate of the second aging variable. For example, when the aging rate f₂=0*V*/*y,* after a lifetime of 40 years, the expected reliability is 0.3, which corresponds to a failure rate of 70%. In other words, after 40 years the reliability of the device is expected to fall below 0.3. As can be seen in sub-figure b), the predicted reliability decreases particularly fast in a short critical timeframe, which depends on the aging rate. For example, for an aging rate of f₂=-0.8*V*/*y*, the reliability decreases from 0.9 to 0.2 in the 5 years following the 22^{nd} year. Similar steep declines in reliability can be observed after the 25^{th} year and after the 35^{th} year for an aging rate of f₂=-0.4*V*/*y* and for an aging rate of f₂=-0*V*/*y,* respectively.

Accordingly, the predicted reliability curves allow identifying a time after which the reliability deteriorates quickly, and thus it would be particularly effective to consider maintenance or replacement after this time.

In sub-figure c), three failure probability density curves are plotted for the same different aging rates as in sub-figure a). The diagram shows, on a vertical axis, a failure probability density and on the horizontal axis a time in years. Each curve displays the failure probability density as a Gaussian function of time for a particular aging rate. For example, for an aging rate of f₂=-0.8*V*/*y*, the failure probability density has a peak at a time t=24y. In other words, the most likely time for a failure to occur is the time around the 24^{th} year. This corresponds to the decline of reliability around that time as observed in sub-figure b). The peaks in the failure probability density curves correspond to the timeframes of steep declines as observable observed in sub-figure b).

Generally speaking, the failure probability density may be gained as a derivative of the failure probability with respect to time. In other words, the failure probability density may be gained as 1 minus a derivative of the reliability with respect to time. Conversely, the reliability may be gained as 1 minus an integral of the failure probability density with respect to time.

The three curves according to sub-figure c) show different degrees of localization. The more localized the curve is, the more precisely a time of failure is predicted. Because the solution of the FPE leads to a broadening of the probability densities, the updating of the calculated probability density function of the aging variable based on the likelihood according to embodiments allows for more a localized failure probability density curve.

Each of the lifetime curves, reliability curves, failure probability density curves as described above are signals indicating a health prediction. Thus, the signal may comprise any of said curves, any value according to any of the curves, and/or remaining lifetime values, RUL values, reliability values, unreliability values, failure probability values, or similar values or curves which relate to a predicted device health and/or predicted device reliability.

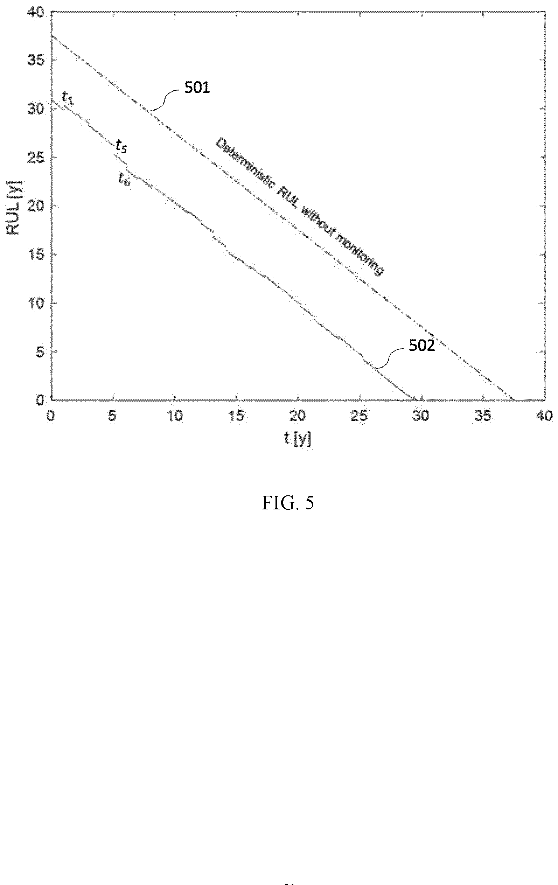

FIG. 5 shows a comparison of an exemplary prediction according to a known method with an exemplary prediction output according to a further embodiment of the present disclosure.

In the diagram shown in FIG. 5, a RUL is plotted on a vertical axis with respect to a time on the horizontal axis.

A dash-dotted line 501 shows a deterministic remaining useful lifetime (RUL) prediction. This RUL corresponds to a difference between a predicted useful lifetime and the passed time. In the example shown in FIG. 5, the predicted deterministic useful lifetime is 37 years. Accordingly, for example at a time *t*=10*y,* the RUL is RUL=37*y*-10*y*=27*y.* The deterministic RUL prediction is merely a linear continuation of an initial prediction of a useful lifetime.

A solid curve 502 shows an updated remaining useful lifetime (RUL) prediction according to an embodiment. The RUL may be calculated as a difference between an updated RUL, i.e., an updated prediction of the remaining useful lifetime, and the time passed since the update. For example, at a time t₅=5*y*, the updated useful lifetime is 25,5 years. Accordingly, for example at a time t₆=6*y*=t₅+1*y* one year after the update, the RUL may be calculated as RUL=25,5y-1y=24,5y. However, at a time t₆=6*y*, the updated useful lifetime is 23,7 years. Accordingly, the diagram in FIG. 5 shows a discontinuity at the time t₆=6*y*. The updated RUL prediction does not correspond a linear continuation of a previous prediction of a useful lifetime.

As can be seen in FIG. 5, a difference between the updated RUL curve 502 and the deterministic RUL curve 501 is a shorter RUL 502 as compared to 501. This difference is due to the fact, that the deterministic RUL is in this case close to the MTTF with a minimum acceptable reliability 1 *- P_{EOL}* close to 50%, while the RUL 501 corresponds to a minimum acceptable reliability 1 *- P_{EOL}* = 95%. A second difference between the updated RUL curve 502 and the deterministic RUL curve 501 is the fluctuation in time. If a failure of a device is to be prevented using a deterministic RUL approach, a margin of safety needs to be subtracted from the deterministic RUL. The margin of safety in this case corresponds to a maximum of said difference between the updated RUL curve 502 and the deterministic RUL curve 501. If a failure of a device is to be prevented using an updated RUL approach, a much smaller margin of safety is required. The margin of safety in this case corresponds to a maximum difference between a RUL according to one update and the RUL for the same time instance calculated according to a subsequent update. This margin of safety is generally smaller than the margin of safety according to a deterministic RUL approach. Thus, using the updated RUL approach, a device may be in use for a longer time. This way, system efficiency and system performance may be increased.

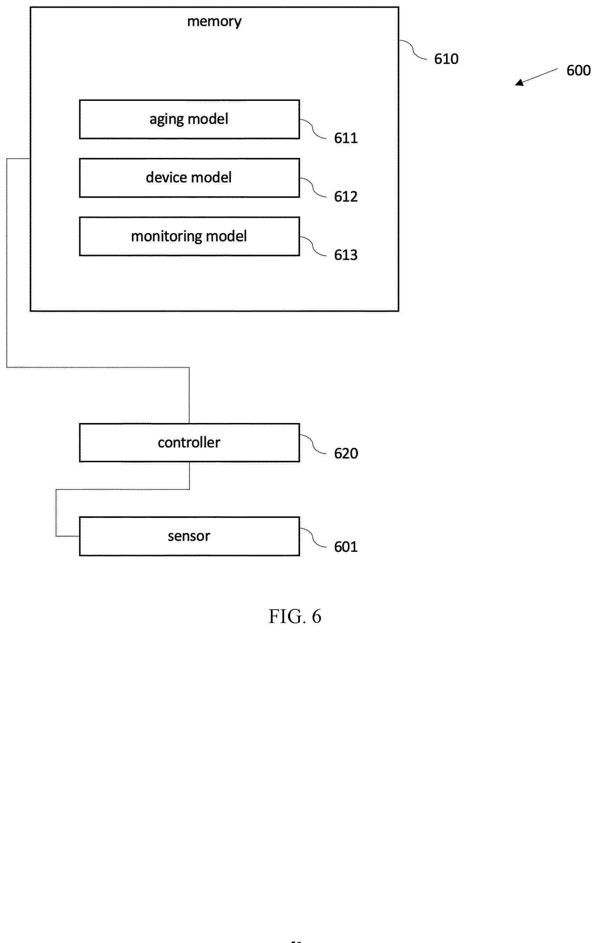

FIG. 6 shows an illustration of a system according to a further embodiment of the present disclosure.

The system 600 comprises at least one sensor 601. The sensor is configured to measure an operating condition related observable of the device.

The system 600 further comprises a memory 610. The memory 610 is configured to store an aging model 611, wherein the aging model 611 comprises an End of Life, EOL, boundary condition and at least one equation with an aging variable of the device.

Further, the memory is configured to store a device model 612. The device model 612 comprises an equation with the aging variable as a device parameter. In this case, the EOL boundary condition is based on the device model 612. The calculation of the likelihood is based on the device model 612. According to other embodiments, the memory may not store a device model 612.

Further, the memory is configured to store a monitoring model 613. The monitoring model 613 comprises an equation with the observable and the aging variable. The monitoring model 613 is based on the device model 612. Calculating the likelihood is based on the monitoring model 613. According to other embodiments, the memory may not store a monitoring model 613.

The memory 610 may store any computer program and/or model according to any of the methods disclosed herein.

The system 600 further comprises a controller 620. The controller is configured to calculate a probability density function over time for the aging variable based on solving the at least one equation from the aging model 611 with the EOL boundary condition. The controller is further configured to obtain first data representing measurement of the observable from the sensor 601. The controller is further configured to calculate a likelihood for the aging variable from the first data. The controller is further configured to update the calculated probability density function of the aging variable based on the likelihood. The controller is further configured to generate a signal indicating a health prediction of the device based on the probability density function, the aging model 611 and the EOL boundary condition.

The controller 620 may be configured to perform any of the methods disclosed herein. The controller 620 can access data stored in the memory 610 and/or write data into the memory 610. The controller 620 can also obtain data from the sensor 601 and/or trigger a measurement of the sensor 601. The controller 620 may comprise at least one integrated circuit. As an alternative or in addition, the controller 620 may comprise the memory 610.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein but is to be accorded the widest scope consistent with the novel features and principles disclosed herein, as recited in the claims below.

## Claims

1. A computer implemented method for monitoring a device, comprising:
calculating a probability density function over time for an aging variable based on solving at least one equation from an aging model (611) with an End of Life, EOL, boundary condition, wherein the EOL boundary condition includes a first boundary condition and a second boundary condition, wherein the first boundary condition is a no-flux boundary condition and the second boundary condition is an absorbing or partly absorbing boundary condition;
measuring an operating condition related observable of the device,
wherein the device is selected from a group comprising a circuit breaker, a transformer, a power electronics device, and an energy storage device, and
wherein the observable is one of: an opening/closing speed of a movable contact of the circuit breaker, travel of the movable contact, total travel of the movable contact, over travel of the movable contact, rebound of the movable contact, opening/closing time of the circuit breaker, and opening/closing peak coil electric current of the circuit breaker;
obtaining first data representing measurement of the observable;
calculating a likelihood for the aging variable from the first data;
updating the calculated probability density function of the aging variable based on the likelihood; and
generating a signal indicating a health prediction of the device based on the probability density function, the aging model (611) and the EOL boundary condition.

2. The method according to claim 1, further comprising:
providing a device model (612), wherein the device model (612) comprises an equation with the aging variable as a device parameter;
wherein the EOL boundary condition is based on the device model (612); and
wherein the calculation of the likelihood is based on the device model (612).

3. The method according to claim 1 or claim 2, further comprising:
providing a monitoring model (613), wherein the monitoring model (613) comprises an equation with the observable and the aging variable;
wherein the monitoring model (613) is based on a device model (612); and
wherein calculating the likelihood is based on the monitoring model (613).

4. The method according to any of claims 1 to 3, wherein generating the signal comprises calculating a representation of a unreliability over time based on the probability density function, the aging model (611) and the EOL boundary condition.

5. The method according to any of claims 1 to 4, wherein generating the signal comprises calculating a Remaining Useful Life, RUL, value.

6. The method according to any of claims 1 to 5,
wherein the aging model (611) comprises an equation with at least two aging variables of the device; wherein calculating the probability density function comprises calculating a joint probability density function of the at least two aging variables;
wherein calculating the likelihood comprises calculating a likelihood for the at least two aging variables and the first data; and
wherein updating the probability density function comprises updating the joint probability density function.

7. The method according to any of claims 1 to 6,
wherein the aging model (611) comprises an equation with aging variables of at least two devices; wherein calculating the probability density function comprises calculating a joint probability density function of the aging variables of each of the devices;
wherein measuring the observable comprises measuring one or more observables of the devices, and wherein the first data represents measurements of the observables;
wherein calculating the likelihood comprises calculating a likelihood for the aging variables and the first data; and
wherein updating the probability density function comprises updating the joint probability density function.

8. The method according to any of claims 1 to 7, further comprising:
triggering maintenance, overhaul, replacement, or load reduction of the device in reaction to the generated signal indicating a critical health prediction within a predetermined amount of time.

9. The method according to any of claims 1 to 8, further comprising:
indicating a warning in reaction to the generated signal indicating a critical health prediction within a predetermined amount of time, used for future maintenance scheduling of the device.

10. A system (600) for monitoring a device, comprising:
at least one sensor, configured to measure an operating condition related observable of the device, wherein the device is selected from a group comprising a circuit breaker, a transformer, a power electronics device, and an energy storage device, and
wherein the observable is one of: an opening/closing speed of a movable contact of the circuit breaker, travel of the movable contact, total travel of the movable contact, over travel of the movable contact, rebound of the movable contact, opening/closing time of the circuit breaker, and opening/closing peak coil electric current of the circuit breaker;
a memory (610), configured to store:
an aging model (611), wherein the aging model (611) comprises an End of Life, EOL, boundary condition and at least one equation with an aging variable of the device, wherein the EOL boundary condition includes a first boundary condition and a second boundary condition, wherein the first boundary condition is a no-flux boundary condition and the second boundary condition is an absorbing or partly absorbing boundary condition;
a controller (620), configured to:
calculate a probability density function over time for the aging variable based on solving the at least one equation from the aging model (611) with the EOL boundary condition;
obtain first data representing measurement of the observable;
calculate a likelihood for the aging variable from the first data;
update the calculated probability density function of the aging variable based on the likelihood; and
generate a signal indicating a health prediction of the device based on the probability density function, the aging model (611) and the EOL boundary condition.

11. The system (600) according to claim 10,
wherein the memory (610) is further configured to store a device model (612), wherein the device model (612) comprises an equation with the aging variable as a device parameter and
wherein the EOL boundary condition is based on the device model (612); and/or to store a monitoring model (613), wherein the monitoring model (613) comprises an equation with the observable and the aging variable and wherein the monitoring model (613) is based on the device model (612); and wherein the controller (620) is further configured to calculate the likelihood based on the device model (612) and/or based on the monitoring model (613).

12. The system (600) according to claim 10 or 11, wherein the controller (620) is further configured to generate the signal using calculating a representation of a failure probability over time based on the probability density function, the aging model (611) and the EOL boundary condition and/or using calculating a Remaining Useful Life, RUL, value.

13. The system (600) according to any of claims 10 to 12,
wherein the memory (610), the controller (620) and the at least one sensor are configured to perform and/or execute the method according to any one of the claims 1 to 9.

## Patentansprüche

1. Computerimplementiertes Verfahren zum Überwachen einer Vorrichtung, umfassend:
Berechnen einer Wahrscheinlichkeitsdichtefunktion über die Zeit für eine Alterungsvariable basierend auf Lösen mindestens einer Gleichung aus einem Alterungsmodell (611) mit einer Ende-der-Lebensdauer-, EOL-, Randbedingung, wobei die EOL-Randbedingung eine erste Randbedingung und eine zweite Randbedingung enthält, wobei die erste Randbedingung eine Ohne-Fluss-Randbedingung ist und die zweite Randbedingung eine Absorptions- oder Teilabsorptionsrandbedingung ist;
Messen einer auf den Betriebszustand bezogenen Observablen der Vorrichtung,
wobei die Vorrichtung aus einer Gruppe ausgewählt ist, die einen Leistungsschalter, einen Transformator, eine Leistungselektronikvorrichtung und eine Energiespeichervorrichtung umfasst, und
wobei die Observable eines ist von: einer Öffnungs-/Schließgeschwindigkeit eines beweglichen Kontakts des Leistungsschalters, einem Hub des beweglichen Kontakts, einem Gesamthub des beweglichen Kontakts, einem Überhub des beweglichen Kontakts, einem Rückprallen des beweglichen Kontakts, einer Öffnungs-/Schließzeit des Leistungsschalters und einem elektrischen Öffnungs-/Schließspitzenspulenstrom des Leistungsschalters;
Erhalten erster Daten, die eine Messung der Observablen repräsentieren;
Berechnen einer Plausibilität für die Alterungsvariable aus den ersten Daten;
Aktualisieren der berechneten Wahrscheinlichkeitsdichtefunktion der Alterungsvariablen basierend auf der Plausibilität; und
Erzeugen eines Signals, welches eine Zustandsvorhersage der Vorrichtung angibt, basierend auf der Wahrscheinlichkeitsdichtefunktion, dem Alterungsmodell (611) und der EOL-Randbedingung.

2. Verfahren nach Anspruch 1, ferner umfassend:
Bereitstellen eines Vorrichtungsmodells (612), wobei das Vorrichtungsmodell (612) eine Gleichung mit der Alterungsvariablen als einem Vorrichtungsparameter umfasst;
wobei die EOL-Randbedingung auf dem Vorrichtungsmodell (612) basiert; und
wobei die Berechnung der Plausibilität auf dem Vorrichtungsmodell (612) basiert.

3. Verfahren nach Anspruch 1 oder 2, ferner umfassend:
Bereitstellen eines Überwachungsmodells (613), wobei das Überwachungsmodell (613) eine Gleichung mit der Observablen und der Alterungsvariablen umfasst;
wobei das Überwachungsmodell (613) auf einem Vorrichtungsmodell (612) basiert; und
wobei das Berechnen der Plausibilität auf dem Überwachungsmodell (613) basiert.

4. Verfahren nach einem der Ansprüche 1 bis 3, wobei das Erzeugen des Signals das Berechnen einer Darstellung einer Unzuverlässigkeit über die Zeit basierend auf der Wahrscheinlichkeitsdichtefunktion, dem Alterungsmodell (611) und der EOL-Randbedingung umfasst.

5. Verfahren nach einem der Ansprüche 1 bis 4, wobei das Erzeugen des Signals das Berechnen eines Restnutzungsdauer-, RUL-, Werts umfasst.

6. Verfahren nach einem der Ansprüche 1 bis 5,
wobei das Alterungsmodell (611) eine Gleichung mit mindestens zwei Alterungsvariablen der Vorrichtung umfasst;
wobei das Berechnen der Wahrscheinlichkeitsdichtefunktion Berechnen einer gemeinsamen Wahrscheinlichkeitsdichtefunktion der mindestens zwei Alterungsvariablen umfasst;
wobei das Berechnen der Plausibilität Berechnen einer Plausibilität für die mindestens zwei Alterungsvariablen und die ersten Daten umfasst; und
wobei das Aktualisieren der Wahrscheinlichkeitsdichtefunktion Aktualisieren der gemeinsamen Wahrscheinlichkeitsdichtefunktion umfasst.

7. Verfahren nach einem der Ansprüche 1 bis 6,
wobei das Alterungsmodell (611) eine Gleichung mit den Alterungsvariablen von mindestens zwei Vorrichtungen umfasst;
wobei das Berechnen der Wahrscheinlichkeitsdichtefunktion Berechnen einer gemeinsamen Wahrscheinlichkeitsdichtefunktion der Alterungsvariablen jeder der Vorrichtungen umfasst; wobei das Messen der Observablen Messen einer oder mehrerer Observablen der Vorrichtungen umfasst, und wobei die ersten Daten Messungen der Observablen repräsentieren;
wobei das Berechnen der Plausibilität Berechnen einer Plausibilität für die Alterungsvariablen und die ersten Daten umfasst; und
wobei das Aktualisieren der Wahrscheinlichkeitsdichtefunktion Aktualisieren der gemeinsamen Wahrscheinlichkeitsdichtefunktion umfasst.

8. Verfahren nach einem der Ansprüche 1 bis 7, ferner umfassend:
Auslösen einer Wartung, Überholung, Auswechselung oder Lastverringerung der Vorrichtung in Reaktion auf das erzeugte Signal, das eine kritische Zustandsvorhersage innerhalb einer vorgegebenen Zeitdauer angibt.

9. Verfahren nach einem der Ansprüche 1 bis 8, ferner umfassend:
Angeben einer Warnung in Reaktion auf das erzeugte Signal, das eine kritische Zustandsvorhersage innerhalb einer vorgegebenen Zeitdauer angibt, die für eine zukünftige Wartungsplanung der Vorrichtung verwendet wird.

10. System (600) zum Überwachen einer Vorrichtung, umfassend:
mindestens einen Sensor, der konfiguriert ist, eine auf den Betriebszustand bezogene Observable der Vorrichtung zu messen,
wobei die Vorrichtung aus einer Gruppe ausgewählt ist, die einen Leistungsschalter, einen Transformator, eine Leistungselektronikvorrichtung und eine Energiespeichervorrichtung umfasst, und
wobei die Observable eines ist von: einer Öffnungs-/Schließgeschwindigkeit eines beweglichen Kontakts des Leistungsschalters, einem Hub des beweglichen Kontakts, einem Gesamthub des beweglichen Kontakts, einem Überhub des beweglichen Kontakts, einem Rückprallen des beweglichen Kontakts, einer Öffnungs-/Schließzeit des Leistungsschalters und eines elektrischen Öffnungs-/Schließspitzenspulenstrom des Leistungsschalters;
einen Speicher (610), der konfiguriert ist, Folgendes zu speichern:
ein Alterungsmodell (611), wobei das Alterungsmodell (611) eine Ende-der-Lebensdauer-, EOL-, Randbedingung, und mindestens eine Gleichung mit einer Alterungsvariablen der Vorrichtung umfasst, wobei die EOL-Randbedingung eine erste Randbedingung und eine zweite Randbedingung enthält, wobei die erste Randbedingung eine Ohne-Fluss-Randbedingung ist und die zweite Randbedingung eine Absorptions- oder Teilabsorptionsrandbedingung ist;
eine Steuereinheit (620), die konfiguriert ist zum:
Berechnen einer Wahrscheinlichkeitsdichtefunktion über die Zeit für die Alterungsvariable basierend auf Lösen der mindestens einen Gleichung aus dem Alterungsmodell (611) mit der EOL-Randbedingung;
Erhalten erster Daten, die eine Messung der Observablen repräsentieren;
Berechnen einer Plausibilität für die Alterungsvariable aus den ersten Daten;
Aktualisieren der berechneten Wahrscheinlichkeitsdichtefunktion der Alterungsvariablen basierend auf der Plausibilität; und
Erzeugen eines Signals, das eine Zustandsvorhersage der Vorrichtung angibt, basierend auf der Wahrscheinlichkeitsdichtefunktion, dem Alterungsmodell (611) und der EOL-Randbedingung.

11. System (600) nach Anspruch 10,
wobei der Speicher (610) ferner konfiguriert ist, ein Vorrichtungsmodell (612) zu speichern, wobei das Vorrichtungsmodell (612) eine Gleichung mit der Alterungsvariablen als einem Vorrichtungsparameter umfasst, und
wobei die EOL-Randbedingung auf dem Vorrichtungsmodell (612) basiert; und/oder ein Überwachungsmodell (613) zu speichern, wobei das Überwachungsmodell (613) eine Gleichung mit der Observablen und der Alterungsvariablen umfasst und wobei das Überwachungsmodell (613) auf dem Vorrichtungsmodell (612) basiert; und
wobei die Steuereinheit (620) ferner konfiguriert ist, die Plausibilität basierend auf dem Vorrichtungsmodell (612) und/oder basierend auf dem Überwachungsmodell (613) zu berechnen.

12. System (600) nach Anspruch 10 oder 11, wobei die Steuereinheit (620) ferner konfiguriert ist, das Signal unter Verwendung des Berechnens einer Darstellung einer Ausfallwahrscheinlichkeit über die Zeit basierend auf der Wahrscheinlichkeitsdichtefunktion, dem Alterungsmodell (611) und der EOL-Randbedingung und/oder unter Verwendung des Berechnens eines Restnutzungsdauer-, RUL-, Werts zu erzeugen.

13. System (600) nach einem der Ansprüche 10 bis 12, wobei der Speicher (610), die Steuereinheit (620) und der mindestens eine Sensor konfiguriert sind, das Verfahren nach einem der Ansprüche 1 bis 9 durchzuführen und/oder auszuführen.

## Revendications

1. Procédé de surveillance d'un dispositif, mis en œuvre par ordinateur, comprenant :
le calcul d'une fonction de densité de probabilité au cours du temps pour une variable de vieillissement sur la base de la résolution d'au moins une équation provenant d'un modèle de vieillissement (611) avec une condition aux limites de fin de vie, EOL, la condition aux limites de fin de vie comportant une première condition aux limites et une deuxième condition aux limites, la première condition aux limites étant une condition aux limites sans flux et la deuxième condition aux limites étant une condition aux limites absorbante ou partiellement absorbante ;
la mesure d'une grandeur observable relative à une condition de fonctionnement du dispositif,
le dispositif étant sélectionné dans un groupe comprenant un disjoncteur, un transformateur, un dispositif d'électronique de puissance et un dispositif de stockage d'énergie, et
la grandeur observable étant l'une des grandeurs suivantes : une vitesse d'ouverture/fermeture d'un contact mobile du disjoncteur, une course du contact mobile, une course totale du contact mobile, une surcourse du contact mobile, un rebond du contact mobile, un temps d'ouverture/fermeture du disjoncteur et un courant électrique de crête de bobine à l'ouverture/fermeture du disjoncteur ;
l'obtention de premières données représentant une mesure de la grandeur observable ;
le calcul d'une vraisemblance pour la variable de vieillissement à partir des premières données ;
la mise à jour de la fonction de densité de probabilité calculée de la variable de vieillissement sur la base de la vraisemblance ; et
la génération d'un signal indiquant une prédiction de l'état de santé du dispositif sur la base de la fonction de densité de probabilité, du modèle de vieillissement (611) et de la condition aux limites EOL.

2. Procédé selon la revendication 1, comprenant en outre :
la fourniture d'un modèle de dispositif (612), le modèle de dispositif (612) comprenant une équation avec la variable de vieillissement comme paramètre de dispositif ;
dans lequel la condition aux limites EOL est basée sur le modèle de dispositif (612) ; et
dans lequel le calcul de la vraisemblance est basé sur le modèle de dispositif (612).

3. Procédé selon la revendication 1 ou la revendication 2, comprenant en outre :
la fourniture d'un modèle de surveillance (613), le modèle de surveillance (613) comprenant une équation avec la grandeur observable et la variable de vieillissement ;
dans lequel le modèle de surveillance (613) est basé sur un modèle de dispositif (612) ; et
dans lequel le calcul de la vraisemblance est basé sur le modèle de surveillance (613).

4. Procédé selon l'une quelconque des revendications 1 à 3, dans lequel la génération du signal comprend le calcul d'une représentation d'une non-fiabilité au cours du temps sur la base de la fonction de densité de probabilité, du modèle de vieillissement (611) et de la condition aux limites EOL.

5. Procédé selon l'une quelconque des revendications 1 à 4, dans lequel la génération du signal comprend le calcul d'une valeur de durée de vie utile restante, RUL.

6. Procédé selon l'une quelconque des revendications 1 à 5,
dans lequel le modèle de vieillissement (611) comprend une équation avec au moins deux variables de vieillissement du dispositif ;
dans lequel le calcul de la fonction de densité de probabilité comprend le calcul d'une fonction de densité de probabilité conjointe des au moins deux variables de vieillissement ;
dans lequel le calcul de la vraisemblance comprend le calcul d'une vraisemblance pour les au moins deux variables de vieillissement et les premières données ; et
dans lequel la mise à jour de la fonction de densité de probabilité comprend la mise à jour de la fonction de densité de probabilité conjointe.

7. Procédé selon l'une quelconque des revendications 1 à 6,
dans lequel le modèle de vieillissement (611) comprend une équation avec des variables de vieillissement d'au moins deux dispositifs ;
dans lequel le calcul de la fonction de densité de probabilité comprend le calcul d'une fonction de densité de probabilité conjointe des variables de vieillissement de chacun des dispositifs ;
dans lequel la mesure de la grandeur observable comprend la mesure d'une ou de plusieurs grandeurs observables des dispositifs, et
dans lequel les premières données représentent des mesures des grandeurs observables ;
dans lequel le calcul de la vraisemblance comprend le calcul d'une vraisemblance pour les variables de vieillissement et les premières données ; et
dans lequel la mise à jour de la fonction de densité de probabilité comprend la mise à jour de la fonction de densité de probabilité conjointe.

8. Procédé selon l'une quelconque des revendications 1 à 7, comprenant en outre :
le déclenchement d'une maintenance, d'une révision, d'un remplacement ou d'une réduction de charge du dispositif en réaction au fait que le signal généré indique une prédiction critique de l'état de santé dans un laps de temps prédéterminé.

9. Procédé selon l'une quelconque des revendications 1 à 8, comprenant en outre :
l'indication d'un avertissement en réaction au fait que le signal généré indique une prédiction critique de l'état de santé dans un laps de temps prédéterminé, utilisé pour une planification future de maintenance du dispositif.

10. Système (600) de surveillance d'un dispositif, comprenant :
au moins un capteur, configuré pour mesurer une grandeur observable relative à une condition de fonctionnement du dispositif,
le dispositif étant sélectionné dans un groupe comprenant un disjoncteur, un transformateur, un dispositif d'électronique de puissance et un dispositif de stockage d'énergie, et
la grandeur observable étant l'une des grandeurs suivantes : une vitesse d'ouverture/fermeture d'un contact mobile du disjoncteur, une course du contact mobile, une course totale du contact mobile, une surcourse du contact mobile, un rebond du contact mobile, un temps d'ouverture/fermeture du disjoncteur et un courant électrique de crête de bobine à l'ouverture/fermeture du disjoncteur ;
une mémoire (610), configurée pour stocker :
un modèle de vieillissement (611), le modèle de vieillissement (611) comprenant une condition aux limites de fin de vie, EOL, et au moins une équation avec une variable de vieillissement du dispositif, la condition aux limites EOL comportant une première condition aux limites et une deuxième condition aux limites, la première condition aux limites étant une condition aux limites sans flux et la deuxième condition aux limites étant une condition aux limites absorbante ou partiellement absorbante ;
un contrôleur (620), configuré pour :
calculer une fonction de densité de probabilité au cours du temps pour la variable de vieillissement sur la base de la résolution de l'au moins une équation du modèle de vieillissement (611) avec la condition aux limites EOL ;
obtenir des premières données représentant une mesure de la grandeur observable ;
calculer une vraisemblance pour la variable de vieillissement à partir des premières données ;
mettre à jour la fonction de densité de probabilité calculée de la variable de vieillissement sur la base de la vraisemblance ; et
générer un signal indiquant une prédiction de l'état de santé du dispositif sur la base de la fonction de densité de probabilité, du modèle de vieillissement (611) et de la condition aux limites EOL.

11. Système (600) selon la revendication 10,
dans lequel la mémoire (610) est en outre configurée pour stocker un modèle de dispositif (612), le modèle de dispositif (612) comprenant une équation avec la variable de vieillissement comme paramètre de dispositif et
dans lequel la condition aux limites EOL est basée sur le modèle de dispositif (612) ; et/ou pour stocker un modèle de surveillance (613), le modèle de surveillance (613) comprenant une équation avec la grandeur observable et la variable de vieillissement et le modèle de surveillance (613) étant basé sur le modèle de dispositif (612) ; et
dans lequel le contrôleur (620) est en outre configuré pour calculer la vraisemblance sur la base du modèle de dispositif (612) et/ou sur la base du modèle de surveillance (613).

12. Système (600) selon la revendication 10 ou 11, dans lequel le contrôleur (620) est en outre configuré pour générer le signal au moyen du calcul d'une représentation d'une probabilité de défaillance au cours du temps sur la base de la fonction de densité de probabilité, du modèle de vieillissement (611) et de la condition aux limites EOL et/ou au moyen du calcul d'une valeur de durée de vie utile restante, RUL.

13. Système (600) selon l'une quelconque des revendications 10 à 12,
dans lequel la mémoire (610), le contrôleur (620) et l'au moins un capteur sont configurés pour réaliser et/ou exécuter le procédé selon l'une quelconque des revendications 1 à 9.
